(19) Europäisches Patentamt / European Patent Office / Office européen des brevets

(11) **EP 3 165 881 A1**

(12) **EUROPEAN PATENT APPLICATION**

(43) Date of publication:
10.05.2017 Bulletin 2017/19

(51) Int Cl.:
*G01F 22/02* *(2006.01)*

(21) Application number: 15192902.3

(22) Date of filing: 04.11.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: ETH Zurich
8092 Zurich (CH)

(72) Inventor: EISMANN, Ralph
8006 Zürich (CH)

(54) **METHOD, DEVICE AND SYSTEM FOR ESTIMATING A LIQUID VOLUME AND APPROPRIATE GAS PRESSURE IN A MEMBRANE EXPANSION VESSEL**

(57)     The invention refers to a Method, a preset-pressure tesintg device and a system for estimating a liquid volume $V_{Mliq}$, in a membrane expansion vessel (2) in a liquid circuit system (4), wherein the method comprises the steps of:
- providing a test vessel (3) with a test vessel volume $V_T$,
- providing a membrane expansion vessel (2) with a membrane expansion vessel volume $V_M$,
- estimating an initial test vessel pressure $p_{ini}$ inside the test vessel (3),

- estimating a pressure $p_M$ inside the membrane expansion vessel (2),
- connecting the test vessel (3) with the membrane expansion vessel (2) such that gas from the membrane expansion vessel (2) can flow into the test vessel (3) and estimating an equilibrium gas pressure $p_{eq}$ of the connected vessels (2, 3).
- estimating a gas volume $V_{Mgas}$ and a liquid volume $V_{Mliq}$ inside the membrane expansion vessel (2), according to the ideal gas equation.

Fig. 2

**Description**

The invention relates to a method, a computer program, a device and a system for estimating a liquid volume and the appropriate gas pressure in a membrane expansion vessel of a liquid circuit system.

Membrane expansion vessels are vessels that are designed for equalizing volume changes of a liquid circuit system, such as for example heating or cooling systems, whose coolant is a liquid. Membrane expansion vessels keep the pressure inside such systems in predefined pressure limits.

Membrane expansion vessels comprise a pressure-resistant housing and an elastic membrane that separates a gas-containing portion of the membrane expansion vessel from a liquid containing portion of the membrane expansion vessel. Said liquid-containing portion is connected to or part of the liquid circuit system, i.e. the liquid of the liquid circuit system can accesses the liquid-containing portion of the membrane expansion vessel.

The membrane is made from a material that inhibits to great extent that gas from the gas-containing portion diffuses through the membrane and potentially dissolves in the liquid on the liquid-containing portion, i.e. the membrane is gas- and liquid tight.

The membrane expansion vessel comprises a volume $V_M$ that is shared by the liquid-containing portion comprising a liquid volume $V_{Mliq}$ and the gas-containing portion comprising a gas volume $V_{mgas}$.

Depending on the temperature- and pressure conditions the gas-containing portion is compressed by the liquid-containing portion by a certain amount. Each liquid membrane expansion vessel is designed for a certain, predefined pressure that is referred to as the preset gas pressure $p_{ref}$, wherein said pressure is associated to a predefined design reference temperature $T_{ref}$ of the membrane expansion vessel.

The preset gas pressure $p_{ref}$ is usually given for a membrane expansion vessel that is devoid of any liquid in the liquid-containing portion.

The preset gas pressure is adjusted by gas filling valve that connects to the gas-containing portion of the membrane expansion vessel. This valve can also be used to adjust and measure the pressure inside the gas-containing portion during operation of the membrane expansion vessel.

As soon as liquid is filled into the liquid containing portion, the pressure inside the gas-containing portion rises as the gas volume $V_{Mgas}$ is compressed by the liquid.

Each liquid circuit system comprises a pressure sensor for measuring the liquid pressure or a means that is configured to attach a pressure sensor to the liquid circuit system or the liquid portion of the membrane expansion sensor. If the gas pressure and the liquid pressure are identical, it is safe to assume that the membrane expansion vessel comprises liquid in the liquid-containing portion.

As many parts of the liquid circuit system give rise to gas leakage and/or liquid leakage, it is necessary to frequently check the gas volume $V_{Mgas}$ and gas pressure $p_M$ inside the gas-containing portion of the membrane expansion vessel as well as the liquid volume and the liquid pressure inside the liquid-containing portion of the membrane expansion vessel that is usually the same as explained above.

However from the measured pressure values it is not possible to estimate the liquid volume $V_{Mliq}$ inside the membrane expansion vessel nor is it possible to estimate a required gas pressure that should act on the membrane expansion vessel at the temperature of operation.

Though for the safe operation of a liquid circuit system it is necessary that the amount of liquid in the liquid-containing portion of the membrane expansion vessel never drops below a predefined minimum volume of liquid in the membrane expansion vessel.

In order to assure that sufficient liquid and gas is provided to the system, the membrane expansion vessel is completely emptied during the frequent inespections. By measuring the volume of the drained liquid the liquid volume inside the membrane expansion vessel is estimated. The method according to the state of the art comprises the steps of :

- An emptying valve is connected to a tubing and a pump with a vessel for receiving the drained liquid volume from the membrane expansion vessel,
- The liquid circuit system is disconnected from the membrane expansion vessel, such that liquid cannot enter the membrane expansion vessel,
- The liquid is completely drained from the membrane expansion vessel,
- The pressure inside the gas-containing portion is measured,
- if necessary a compressor is connected to the membrane expansion vessel and the gas pressure is adjusted.
- Liquid of the same kind is reinserted until the liquid volume corresponds to a predefined required liquid volume $V_{req}$.

For several reasons the procedure is only performed infrequently during yearly inspections of liquid circuit systems. As the procedure can only be performed when the operation of the liquid circuit system and thus the whole system is interrupted, the system cannot operate during the inspection. If nonetheless the system would be kept operational, potential volume changes (due to temperature changes) inside the liquid circuit system would not be compensated by the membrane expansion vessel, which in turn could lead to major damages. Such damages are for example air suction into the liquid circuit system, in case a temperature drop with a correlated pressure drop occurs during inspection.

Furthermore, the gas compressors and liquid pumps might not be fully deployed of air or gas, such that the reinserting of liquid into the liquid circuit system will also insert gas or air into the liquid circuit system. Therefore, the state of the liquid circuit system after inspection is often worse as it was before inspection. The inspection as well as the de-gasing process after inspection are quite elaborate and time-consuming.

For this reason these inspections are done only during repair times of the liquid circuit system - that is after a damage has occurred already. Most damages however are due to pressure deviations in the system, where either the gas or the liquid pressure are outside the required limits.

Therefore the problem underlying the present invention is to provide a method, a device and a system allowing the safe inspection of a liquid circuit system while the liquid circuit system is operating.

This problem is solved by a method having the features of claim 1, a computer program according to claim 7, a preset-pressure testing device having the features of claim 8 and a system having the features of claim 14. Preferred embodiments are stated in the sub claims.

According to claim 1, a method for estimating a liquid volume $V_{Mliq}$, in a membrane expansion vessel of a liquid circuit system, comprises the steps of:

- providing a test vessel with a test vessel volume $V_T$,
- providing a membrane expansion vessel with a membrane expansion vessel volume $V_M$,
- estimating an initial test vessel pressure $p_{ini}$ inside the test vessel,
- estimating a pressure $p_M$ inside the expansion vessel,
- connecting the test vessel with the membrane expansion vessel such that gas from the membrane expansion vessel can flow into the test vessel and estimating an equilibrium gas pressure $p_{eq}$,
- estimating a gas volume $V_{Mgas}$ of the gas-containing portion of the membrane expansion vessel and a liquid volume $V_{Mliq}$ of the liquid containing portion of the membrane expansion vessel, according to the ideal gas equation.

Liquid circuit systems for such an membrane expansion vessel are for example encountered in solar plants, in house-holds and many other infrastructures that make use of a liquid-based heating or cooling system.

The volume of the test vessel $V_T$ is preferably in the range of 5%- 10% of the volume of the membrane expansion vessel. Smaller test volumes are suitable for the invention as well, however the smaller the test vessel volume the more demanding it will be to estimate the correct gas volume and liquid volume inside the membrane expansion vessel - thus, the requirements on the pressure sensor increase.

The membrane expansion vessel volume $V_M$ is the complete volume that is accessible to gas and liquid inside the membrane expansion vessel.

Pressure estimations are preferably carried out with pressure sensors. The initial pressure $p_{ini}$ of the test vessel might be the atmospheric pressure or the pressure that is inside the test vessel before the test vessel is connected to the membrane expansion vessel.

A connection of the test vessel with the membrane expansion vessel is for example established by connecting the test vessel with a gas filling valve at the membrane expansion vessel that is configured to be connected to a pressure-testing device and the like. After the connection of the test vessel with the membrane expansion volume is established, gas from the membrane expansion volume will flow into the test vessel volume, if the gas pressure in the membrane expansion volume is higher than in the test vessel volume. A pressure difference between the test vessel volume and the membrane expansion vessel volume will be equalized within a short time period. Also the temperature difference between the test vessel and the membrane expansion vessel will decrease after a short period of time. The equalized gas pressure is referred to as the equilibrium gas pressure $p_{eq}$. This equilibrium gas pressure can be estimated or measured at various locations, for example at the test vessel, at the membrane expansion vessel or somewhere along the connection between the two vessels.

The problem according to the invention is subsequently completely solved by applying the ideal gas equation and estimating a gas volume inside the membrane expansion vessel and a liquid volume inside the membrane expansion vessel. Subsequently, the gas volume inside the membrane expansion vessel and/or the amount of liquid inside the liquid circuit system can be adjusted, wherein the liquid volume of the liquid circuit system is adjusted by adjusting the liquid volume of the membrane expansion vessel accordingly.

Advantageously, the liquid circuit system can remain operational during the time the method according to the invention is carried out.

Furthermore, the invention provides a safe and convenient way to estimate and adjust a gas and liquid volume of a membrane expansion vessel, during operation. Another advantage is that no de-gasing has to be carried out after the method according to the invention has been executed.

Also, the time required to perform the method according to the invention is reduced to great extent.

According to another embodiment of the invention, the gas volume $V_{Mgas}$ inside the membrane expansion vessel is determined according to the formula

$$(Eq.\ 1) \qquad V_{Mgas} = V_T \bullet (p_{eq} - p_{ini}) / (p_M - p_{eq})$$

and wherein the liquid volume $V_{Mliq}$ inside the membrane expansion vessel is determined by $V_{Mliq} = V_M - V_{Vgas}$.

This embodiment allows for a simplified estimation of the gas and liquid volume inside the membrane expansion vessel. Said embodiment advantageously allows an estimation of the gas and liquid volume without the need to determine the temperatures of neither the membrane expansion vessel nor the test vessel or any other temperature of the system.

If a more precise estimation of the gas and/or liquid volume inside the membrane expansion vessel is desired, temperatures can be taken into account in the following way:

$$(Eq.\ 2) \qquad V_{Mgas} = V_T \bullet (p_{eq} / T_{eq} - p_{ini} / T_{ini}) / (p_M / T_M - p_{eq} / T'_M)\ ,$$

Wherein $T_{ini}$ is the temperature of the test vessel before gas from the membrane expansion vessel flows into the test vessel volume, which is usually room temperature. $T_{eq}$ on the other hand is the equilibrium temperature inside the test vessel that is established after the two connected vessels are equalized in pressure and temperature. It might be that $T_{eq}$ is not uniform along the connection of the membrane expansion vessel and the test vessel. In this case it is possible to use an average temperature value as $T_{eq}$. $T_M$ is the temperature inside the membrane expansion vessel before gas flow is established between the two vessels, wherein $T'_M$ is the temperature inside the membrane expansion vessel after the gas flow has taken place.

As can be easily comprehended the membrane expansion vessel connected to the liquid circuit system acts like an infinite heat reservoir. Therefore, $T_M$ and $T'_M$ should not change or only marginal. For the same reason $T_{eq}$ can be assumed to be close to $T_M$. $T_{ini}$ can be assumed to be the same magnitude as the other temperatures and can be assumed to identical. Applying these simplifications the gas volume inside the membrane expansion vessel simplifies to equation (Eq. 1).

However, if a more accurate estimation of the gas volume is desired, all or some of the corresponding temperatures $T_M$, $T'_M$, $T_{ini}$, $T_{eq}$ can be estimated and taken into account according to equation (Eq. 2). It might be particularly advantageous to assume the identities of $T_M = T'_M = T_{eq}$, estimate one of these temperatures, estimate the initial temperature $T_{ini}$ of the test vessel and apply equation (Eq. 2) accordingly.

Another embodiment of the invention is realized by estimating a temperature $T_{Mgas}$ of the gas and/or a temperature $T_{Mliq}$ of the liquid present inside the liquid circuit system, wherein said gas and/or liquid temperature $T_{Mgas}$, $T_{Mliq}$ are particularly measured at or inside the membrane expansion vessel, particularly before connecting the test vessel with the membrane expansion vessel. Subsequently, a liquid volume difference $dV_{liq}$ is estimated that accounts for the thermal expansion of the liquid inside the liquid circuit system in relation to a design reference temperature $T_{ref}$ of the liquid circuit system.

In most cases $T_{Mgas}$ is equal to $T_{Mliq}$. Then, $T_{Mgas}$, $T_{Mliq}$ are identical to $T_M$ and/or $T'_M$.

$T_{Mgas}$ and/or $T_{mliq}$ can be measured for example by attaching a temperature sensor to the outside (the shell) of the membrane expansion vessel and simply measure the temperature of the membrane expansion vessel. The deviations occurring due to the indirect nature of such a measurement can be accounted for in an additional processing step.

As the design reference temperature is often lower than the temperature during operation, the thermal expansion of the liquid inside the liquid circuit system has to be taken into account in order to reference the liquid volume estimated inside the membrane expansion volume to the correct temperature.

According to another embodiment of the invention, the liquid volume difference $dV_{liq}$ is estimated according to the equation

$$(Eq.\ 3) \qquad dV_{liq} = V_{ref} \bullet (\rho_{ref} - \rho_{Mliq}) / \rho_{ref},$$

wherein $p_{ref}$ is the density of the liquid inside the liquid circuit system at the design reference temperature $T_{ref}$, $\rho_{Mliq}$ is the density of the liquid inside the liquid circuit system at the temperature $T_{Mliq}$ or $T_{Mgas}$, wherein $V_{ref}$ is the volume of the liquid inside the liquid circuit system at the design reference temperature $T_{ref}$.

For most coolants or heat transfer liquids the densities as functions of the temperature are well known and can be look-up for example in a built-in or attached database, in case the method according to the invention is carried out in cooperation with or on a computer.

The reference volume $V_{ref}$ is known and often printed on the membrane expansion vessel. This value can for example manually be entered in a computer if the method according to the invention is carried out in cooperation with or on a computer. The same applies for the design reference temperature $T_{ref}$.

According to another embodiment of the invention, a predefined required liquid volume $V_{req}$ inside the liquid circuit system at the reference temperature $T_{ref}$ is provided and wherein a liquid deviation volume $dV_{dev}$ is estimated that has to be added to the liquid circuit system in order to provide the membrane expansion vessel with the predefined required liquid volume $V_{req}$, wherein said liquid deviation volume $dV_{dev}$ is particularly estimated according to equation (Eq. 4), wherein particularly said liquid deviation volume $dV_{dev}$ is added to the liquid circuit system.

$$(Eq.\ 4) \qquad dV_{dev} = V_{req} + dV_{liq} - V_{Mliq}.$$

The predefined required liquid volume $V_{req}$ can be expressed as the sum of a liquid reservoir or minimum volume and a reserve volume.

According to another embodiment of the invention, a required gas pressure $p_{req}$ for the membrane expansion device is estimated, particularly according to equation (Eq. 5).

$$(Eq.\ 5) \qquad p_{req} = (p_{ref} \bullet V_M \bullet T_{Mgas})/((V_{Mgas} - dV_{dev}) \bullet T_{ref}),$$

wherein $p_{ref}$ is a preset-pressure inside the membrane expansion vessel at the design reference temperature $T_{ref}$ when no liquid is inside the membrane expansion vessel, and wherein if the liquid deviation volume $dV_{dev}$ has not been added to the liquid circuit system, $dV_{dev}$ is treated as if equal zero. If necessary, the required gas pressure $p_{req}$ is adjusted by adding or removing gas to/of the gas-containing portion of the membrane expansion vessel.

The required gas pressure $p_{req}$ is the gas pressure inside the membrane expansion vessel during operation of the system, during which usually a different, higher, temperature is present.

The required gas pressure inside the membrane expansion vessel is dependent of whether the liquid deviation volume $dV_{dev}$ has been added to the liquid circuit system or not, as the pressure will rise in case the liquid deviation volume $dV_{dev}$ is added after the required gas pressure has been adjusted.

Furthermore, the problem according to the invention is solved by a computer program, wherein the computer program comprises program code that when executed on a processor, the method according to the invention is executed.

In order for the computer program to be executed properly and to be able to estimate the various values, it might become necessary to input some system specific values, such as for example the design reference temperature $T_{ref}$ or the preset pressure $p_{ref}$. The input can be entered manually, electronically or by use of a some scan method, that is configured to scan and/or read these values from a database or from the membrane expansion vessel (e.g. by means of a barcode scan, by means of an RFID chip or electronically).

Furthermore the computer program can be design to generate commands that are configured to be sent to external devices and that are furthermore configured to instruct these devices to perform certain actions, such as for example pumping gas into the membrane expansion vessel or pumping liquid in the liquid circuit system.

The problem according to the invention is also solved by a preset-pressure testing device for membrane expansion vessels in liquid circuit systems, comprising at least the following components:

- at least one temperature sensor that is configured to estimate the temperature inside or at the shell of the membrane expansion vessel and/or inside or at the test vessel,

- a pressure sensor,

- a test vessel, that is configured to be connected in an gas flow-connecting manner to a gas-containing portion of a membrane expansion vessel,

wherein the preset-pressure testing device is configured to measure a pressure in the test vessel with the pressure sensor and if the device is connected to a membrane expansion vessel to measure the pressure of a gas-containing portion of the expansion vessel with the pressure sensor,

- a controller, that is configured to receive and process temperature data from the at least one temperature sensor, pressure data from the pressure sensor and other external data, and to estimate a liquid volume that is to be adjusted in the liquid circuit system as well as a required gas pressure in the membrane expansion vessel, wherein the controller is configured to process the temperature data, the pressure data and the volume data according to the method according to the invention.

The temperature inside the membrane expansion vessel is particularly estimated by attaching the particularly magnetic temperature sensor to the membrane expansion vessel wall. The controller can furthermore contain means to adjust the measured temperature from the sensor for cooling effects due to the indirect measurement of the temperature at the membrane expansion vessel.

The connection of the test vessel of the preset-pressure testing device is particularly realized by connecting the test vessel via a gas valve to the membrane expansion vessel.

According to another embodiment of the invention, the preset-pressure testing device comprises a first two-way valve, comprising two flow connections, wherein the test vessel is connected to a first flow connection of the first two-way valve and the second flow connection is connectable to a membrane expansion vessel.

This advantageously allows separating the connecting step of the preset-pressure testing device to the membrane expansion vessel from the measurement step that can be carried out by the preset-pressure testing device.

According to another embodiment of the invention, the preset-pressure testing device comprises a second two-way valve or a check valve (14), comprising two flow connections, wherein a first flow connection of the second two-way valve or check valve is connectable to a membrane expansion vessel simultaneously with the first two-way valve, and wherein the second connection of the second two-way valve or the check valve is connected or connectable to a gas pump or a compressor.

According to another embodiment of the invention, the preset-pressure testing device comprises a three-way valve, comprising three connectors, wherein the test vessel is connected to a first connector of the three-way valve, wherein a second connector of the three-way valve is connectable to a membrane expansion vessel and wherein a third connector of the three-way valve is connected or connectable to a compressor or a manually operated pump.

This way it is advantageously achieved that after the required gas pressure has been estimated the required gas pressure can be adjusted by attaching a gas pump or a compressor to the third connector of the three-way valve und adjust the pressure while monitoring the pressure with the preset-pressure testing device.

According to another embodiment of the invention, the preset-pressure testing device comprises a compressor or a manually operated gas pump that is particularly connected to the three-way valve, the check valve or the second two-way valve and that is configured to adjust a gas pressure inside a membrane expansion vessel.

An equivalent variation of this embodiment comprises two two-way valves on a split connection to the membrane expansion vessel, wherein the compressor or the manually operated pump is attached to one of the two valves and the preset-pressure testing device is attached to the second valve.

According to another embodiment of the invention, the preset-pressure testing device is configured to automatically control its components, particularly the two-way or three-way valve, the compressor or gas-pump, a liquid pump for adjusting the liquid volume in the liquid circuit system, the temperature sensor and/or the pressure sensor, such that the device is operating partially or fully automatically, wherein the device particularly estimates the required physical entities such as temperature, pressure and volumes and adjusts the pressure and the liquid volume automatically, wherein the device particularly comprises an interface that allows a user to input data that is needed for processing the method according to the invention.

The device can furthermore comprise components such as a display where the status of the measurement and instruction for the user are displayed.

The problem according to the invention is also solved by a system for adjusting a preset-pressure of a circuit system, wherein said system comprises

- a preset-pressure testing device according to the invention,

- a liquid circuit system comprising a membrane expansion vessel.

Further features and advantages of the invention shall be described by means of a detailed description of embodiments with reference to the Figures. The features serve as disclosure for further claims and might be combined in any combination that is executable with any of the claims, wherein it is shown in

Fig. 1    a schematic view of a membrane expansion vessel;

Fig. 2    a schematic view of a preset-pressure testing device;

Fig. 3    a preset-pressure testing device of Fig. 2 with a second temperature sensor for the test vessel;

Fig. 4    a preset-pressure testing device of Fig. 3 with an attached manually operated gas pump;

Fig. 5    a preset-pressure testing device of Fig. 4 with a three-way valve;

Fig. 6    a preset-pressure testing device of Fig. 5 with a controlled compressor attached;

Fig. 7    a preset-pressure testing device of Fig. 6 with a second temperature sensor to estimate temperature gradient in the membrane expansion vessel;

Fig. 8    a preset-pressure testing device of Fig. 7 with a controlled liquid pump;

Fig. 9    a preset-pressure testing device of Fig. 8 with controlled valves;

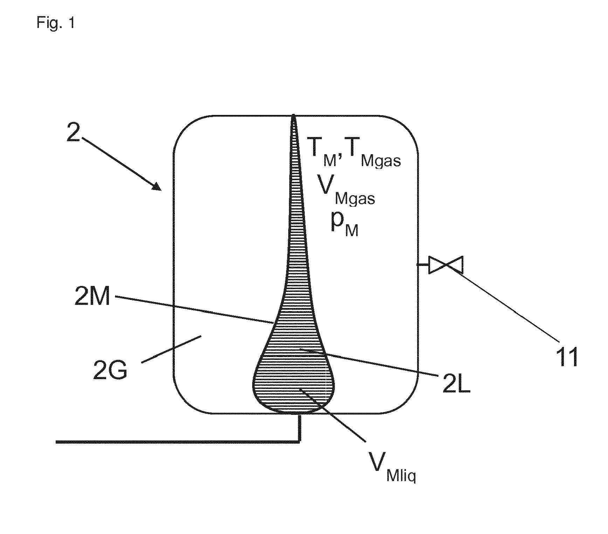

In Figure 1 to Fig. 9 comprise schematic drawing of a membrane expansion vessel 2. The membrane expansion vessel 2 comprises a wall or shell that encloses a membrane expansion vessel volume $V_M$. The membrane expansion vessel volume $V_M$ comprises a gas-containing portion 2G with a gas volume $V_{Mgas}$ and a liquid comprising portion 2L with a liquid volume $V_{Mliq}$. These two portions 2L, 2G are separated by an elastic membrane 2M that is gas and liquid tight. The liquid-containing portion 2L is connected to a liquid circuit system 4. During regular operation, the temperature $T_M$ inside the membrane expansion vessel 2 is the same in the gas-containing portion 2G and the liquid containing portion 2L. The pressure inside the gas-containing and liquid-containing portion 2G, 2L during regular operation is referred to as $p_M$.

The gas-containing portion 2G, has a gas filling valve 11 that can be connected to a pressure sensor 20.

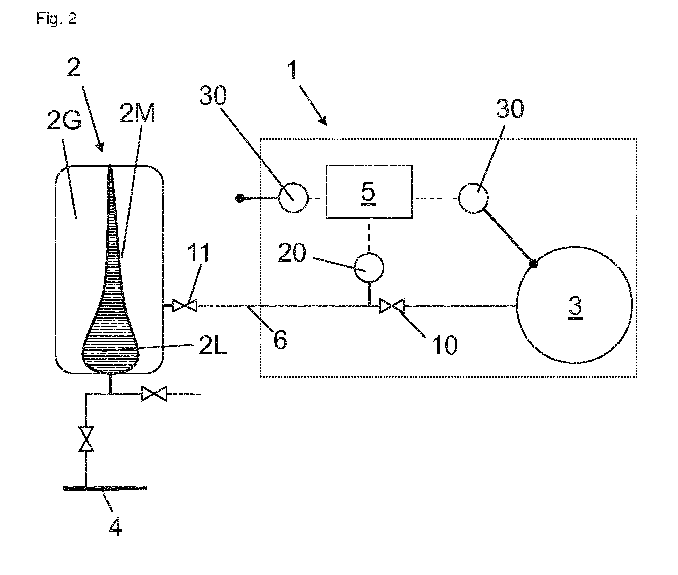

In Fig. 2 to Fig 9 a liquid circuit system 4 with a membrane expansion vessel 2 is shown and various embodiments of the preset-pressure testing device 1 (enclosed in the dotted box). In all shown embodiments the preset-pressure testing device 1 comprises a test vessel 3 with a volume $V_T$. Furthermore, the preset-pressure testing device 1 comprises first valve 10 and connection means 6 in order to be connectable to the membrane expansion vessel particularly via the gas filling valve 11 of the membrane expansion vessel 2 (indicated by the dotted line extending between then connection means 6 and the gas filling valve 11 of the membrane expansion vessel 2). The first valve 10 is configured to open and close a connection between the test vessel 3 and the membrane expansion vessel 2 if the two devices are physically connected. A pressure sensor 20 of the preset-pressure testing device 1 is arranged such with respect to the first valve 10 that if the valve 10 is closed while a connection is established between the pressure testing device and membrane expansion vessel 2, it is possible to measure the gas pressure $p_{Mgas}$ of the membrane expansion vessel 2. A controller 5 of the preset-pressure testing device 1 is configured to receive the data from the pressure sensor 20. Furthermore, said controller 5 is also configured to receive temperature data measured by at least one temperature sensor 30 that is attachable to the test vessel and/or the membrane expansion vessel. If the preset-pressure testing device 1 has only a single temperature sensor 30, the sensor 30 is used in a sequential manner (not shown). The controller 5 is further configured to adjust received temperature data such that temperature deviations due to e.g. radiation and convective losses on the surface of the membrane expansion vessel 2 are accounted for.

Subsequent to a measurement a gas pump 40 or a compressor 41 can be attached to the gas filling valve 11 of the membrane expansion vessel 2 in order to adjust the gas pressure inside the membrane expansion vessel 2. Also the amount of liquid in the liquid circuit system 4 can be adjusted subsequently by an appropriate means, such as a manually 50 or electrically driven liquid pump 51, that can be attached to the liquid circuit system 4.

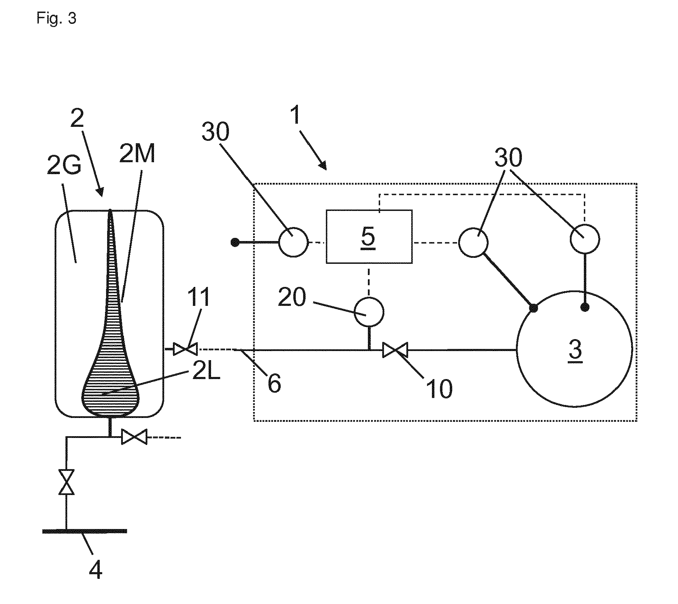

Fig. 3 shows a slight variation with respect to the embodiment shown in Fig. 2.

Here one temperature sensor 30 is also configured to measure the temperature inside the test vessel 3.

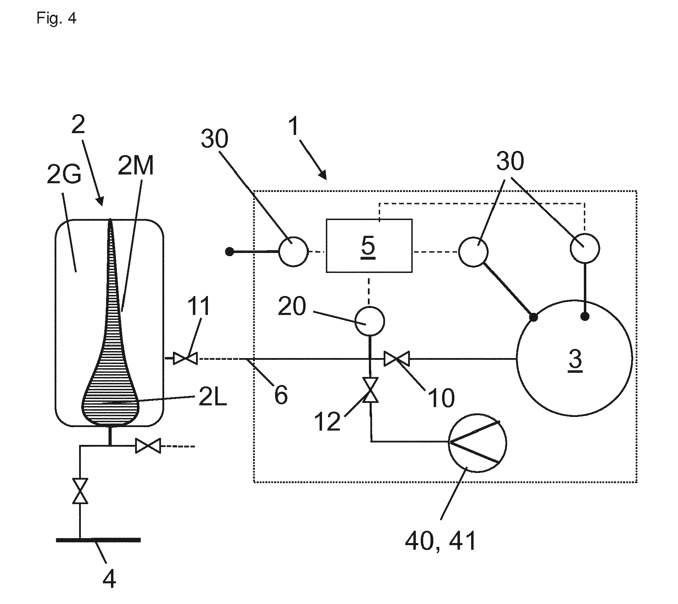

Alternatively to the subsequent attachment of a manually operated gas pump or compressor, it is possible to incorporate these means into the preset-pressure testing device 1 (see Fig. 4). For this reason the embodiment shown in Fig. 4 comprises a second valve 12 that is arranged at a forking of the connection between the test vessel 3 and the membrane expansion vessel 2. The second valve 12 is in a second branch that instead of being connected to the test vessel 3 it is connected to the manually operated pump 40 or the compressor 41.

The pressure sensor 20 is upstream of both valves such that it measures the pressure regardless whether the first 11 or the second valve 12 is open or closed in the connection between the test vessel 3 and the membrane expansion vessel 2.

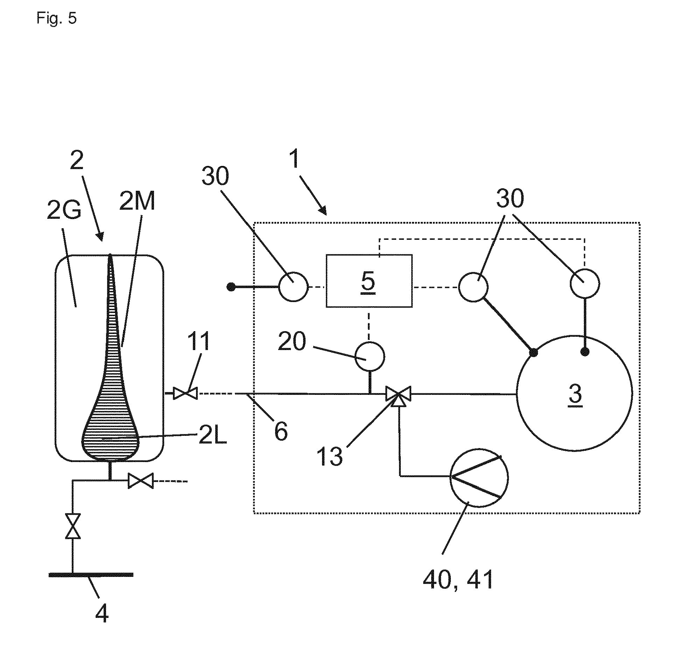

Alternatively to the use of two two-way valves 10, 12 it is possible to replace the first and second valve 10, 12 by a three-way valve 13 (see Fig. 5). This embodiment is an equivalent to the embodiment shown in Fig. 4.

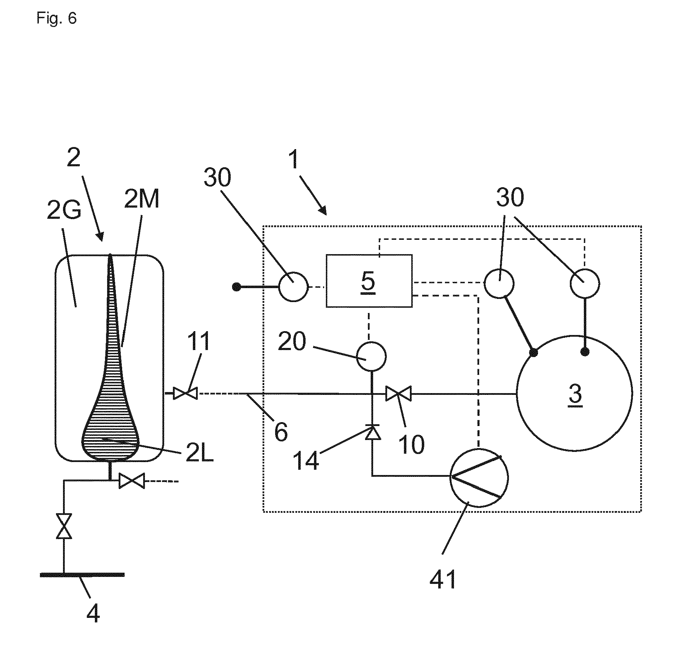

Fig. 6 shows a semi-automatic configuration of the preset-pressure testing device 1, wherein compressor 41 is controllable by the controller 5 of the preset-pressure testing device 1 (indicated by the dotted line between the controller 5 and the compressor 41). Here, the second valve 12 is replaced by a check valve 14.

This embodiment allows to execute the method according to the invention and subsequently to adjust the gas pressure $p_{Mgas}$ in the membrane expansion vessel 2 without the need for an operator.

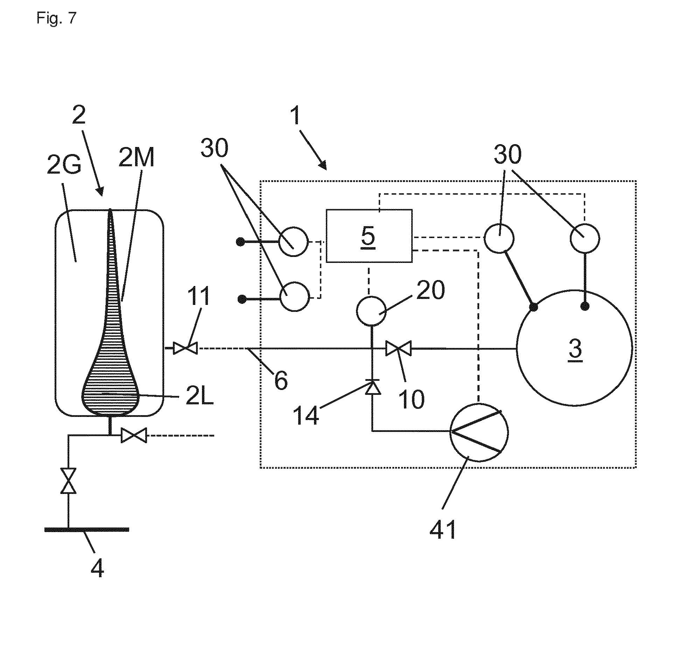

Fig. 7 shows an embodiment of the preset-pressure testing device 1 that is configured to measure the temperature $T_M$ of the membrane expansion vessel 1 at two different positions on the shell of the membrane expansion vessel1 (an upper position and a lower position) in order to also account for a temperature gradient inside the membrane expansion vessel 1. The controller is then taking into account the potential temperature gradient inside the membrane expansion vessel 1. For this reason the preset-pressure testing device 1 can be equipped with two temperature sensors 30. The temperature sensors can have magnetic properties so they can be attached to a metallic shell of the membrane expansion vessel.

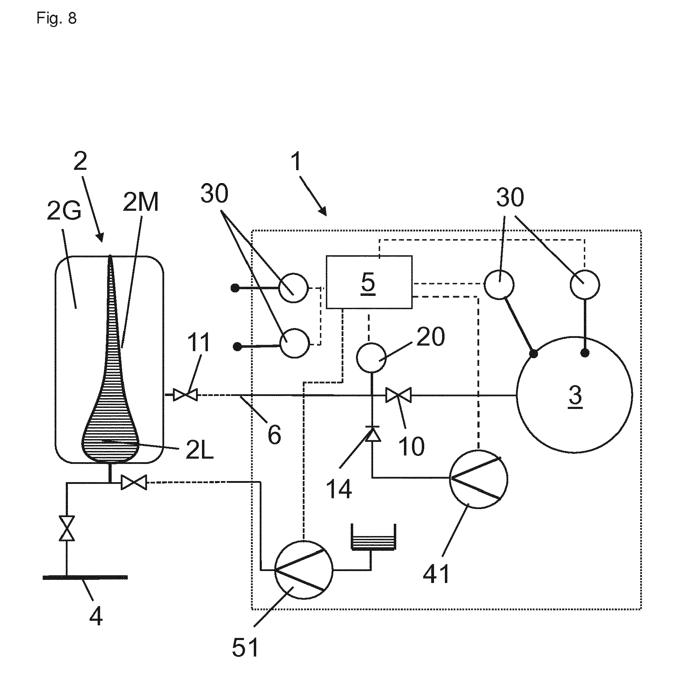

More automation can be achieved by also connecting a controllable electric liquid pump 51 to the controller as shown in Fig. 8. Said liquid pump 51 is configured to adjust the liquid volume $V_{Mliq}$ inside the liquid circuit system 4. Based on the results for the gas pressure $p_{Mgas}$ and the liquid volume $V_{Mliq}$, the controller 5 can then adjust both entities by means of the compressor 41 and the liquid pump 51.

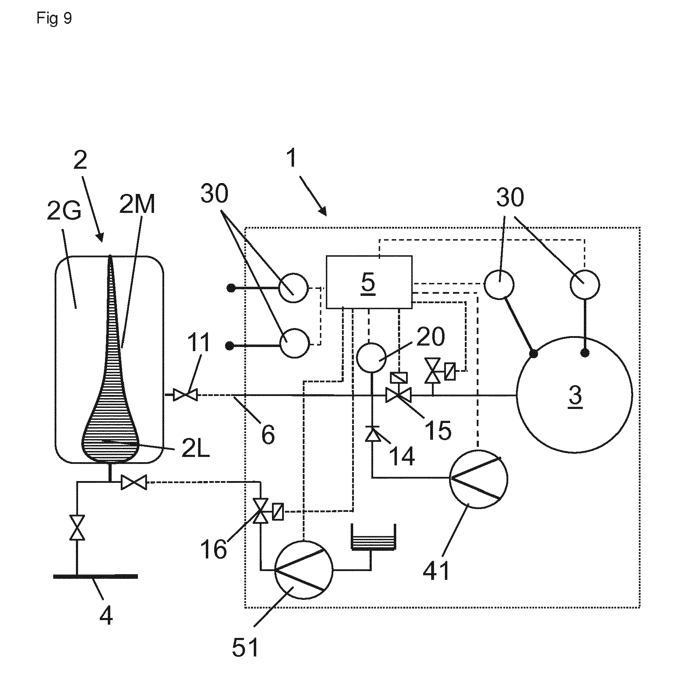

A fully automatic embodiment of the preset-pressure testing device 1 is shown in Fig. 9, where the controller 5 comprises additional valves 15, 16 that are all machine-controllable by the controller and that serve for a fully automatic handling of all steps of the method according to the invention. In this embodiment the first valve 10 is replaced by the machine-controllable valve 15. The opening and closing of the valves 15, 16 is controlled such that the method according to the invention can be performed. Temperatures and pressures are measured accordingly and the controller 5 processes the measurement data.

## Claims

1. Method for estimating a liquid volume $V_{Mliq}$, in a membrane expansion vessel (2) in a liquid circuit system (4), comprising the steps of:

   - providing a test vessel (3) with a test vessel volume $V_T$,
   - providing a membrane expansion vessel (2) with a membrane expansion vessel volume $V_M$,
   - estimating an initial test vessel pressure $p_{ini}$ inside the test vessel (3),
   - estimating a pressure $p_M$ inside the membrane expansion vessel (2),
   - connecting the test vessel (3) with the membrane expansion vessel (2) such that gas from the membrane expansion vessel (2) can flow into the test vessel (3) and estimating an equilibrium gas pressure $p_{eq}$ of the connected vessels (2, 3).
   - estimating a gas volume $V_{Mgas}$ and a liquid volume $V_{Mliq}$ inside the membrane expansion vessel (2), according to the ideal gas equation.

2. Method according to claim 1, wherein the gas volume $V_{Mgas}$ inside the membrane expansion vessel (2) is determined according to the formula

$$V_{Mgas} = V_T \cdot (p_{eq} - p_{ini})/(p_M - p_{eq})$$

and wherein the liquid volume $V_{Mliq}$ inside the membrane expansion vessel (2) is determined by $V_{Mliq} = V_M - V_{Mgas}$.

3. Method according to claim 1 or 2, wherein a temperature $T_{Mgas}$ of the gas and/or a temperature $T_{Mliq}$ of the liquid inside the liquid circuit system (4) is estimated, particularly before connecting the test vessel (3) with the membrane expansion vessel (2), and wherein a liquid volume difference $dV_{liq}$ is estimated that accounts for the thermal expansion of the liquid inside the liquid circuit system (4) in relation to a design reference temperature $T_{ref}$.

4. Method according to claim 3, wherein the liquid volume difference $dV_{liq}$ is estimated according to the equation

$$dV_{liq} = V_{ref} \cdot (\rho_{ref} - \rho_{Mliq})/\rho_{ref},$$

wherein $\rho_{ref}$ is the density of the liquid inside the liquid circuit system (4) at the reference temperature $T_{ref}$, $\rho_{Mliq}$ is the density of the liquid inside the liquid circuit system (4) at the temperature $T_{Mliq}$ or $T_{Mgas}$, wherein $V_{ref}$ is the volume of the liquid inside the liquid circuit system (4) at the reference temperature $T_{ref}$.

5. Method according to claim 3 or 4, wherein a predefined required liquid volume $V_{req}$ inside the membrane expansion vessel (2) at the design reference temperature $T_{ref}$ is provided and wherein a liquid deviation volume $dV_{dev}$ is estimated that has to be added to the liquid circuit system (4) such that the predefined required liquid volume $V_{req}$ is available inside the membrane expansion vessel (2), wherein said liquid deviation volume $dV_{dev}$ is particularly added to the liquid circuit system (4), wherein said liquid deviation volume $dV_{dev}$ is particularly estimated according to the formula

$$dV_{dev} = V_{req} + dV_{liq} - V_{Mliq}.$$

6. Method according to one of the claims 2 to 5, wherein a required gas pressure $p_{req}$ for the membrane expansion vessel (2) is estimated and wherein the required gas pressure $p_{req}$ is particularly adjusted in the membrane expansion vessel (2), particularly according to the formula

$$p_{req} = (p_{ref} \bullet V_M \bullet T_{Mgas}) / ((V_{Mgas} - dV_{dev}) \bullet T_{ref}),$$

wherein $p_{ref}$ is a preset-pressure inside the membrane expansion vessel (2) when there is no liquid inside the vessel at the design reference temperature $T_{ref}$ inside the membrane expansion vessel (2), and wherein, if the liquid deviation volume $dV_{dev}$ has not been added to the liquid circuit system (4), $dV_{dev}$ is treated as if equal zero for this step.

7. Computer program product with a computer program, wherein the computer program comprises program code that when executed on a processor or computer the method according to one of the claims 1 to 6 is executed.

8. Preset-pressure testing device (1) for membrane expansion vessels (2) in liquid circuit systems (4), comprising at least the following components:

   - a temperature sensor (30),
   - a pressure sensor (20),
   - a test vessel (3), that is configured to be connected in a gas flow-connecting manner to a membrane expansion vessel (2),
   wherein the preset-pressure testing device (1) is configured to measure a pressure in the test vessel (3) with the pressure sensor (20) and if the preset-pressure testing device (1) is connected to a membrane expansion vessel (2) to measure the pressure of the membrane expansion vessel (2) with the pressure sensor (20),
   - a controller (5), that is configured to receive and process temperature data from the temperature sensor (30), pressure data from the pressure sensor (20), and to estimate a liquid deviation volume $dV_{dev}$ that is to be adjusted in the liquid circuit system (4) as well as a required gas pressure $p_{req}$ in the membrane expansion vessel (2), wherein the controller (5) is configured to process the temperature data, the pressure data according to the method according to the claims 1 to 6, particularly by executing a computer program according to claim 7.

9. Preset-pressure testing device according to claim 8, wherein the preset-pressure testing device (1) comprises a first two-way valve (10), comprising two flow connections, wherein the test vessel (3) is connected to a first flow connection of the first two-way valve (10) and the second flow connection is connectable to a membrane expansion vessel (3).

10. Preset-pressure testing device according to claim 9, wherein the preset-pressure testing device (1) comprises a second two-way valve (12) or a check valve (14), comprising two flow connections, wherein a first flow connection of the second two-way valve (12) or check valve (14) is connectable to a membrane expansion vessel (2) simultaneously with the first two-way valve (10), and wherein the second connection of the second two-way valve (12) or check valve (14) is connected or connectable to a gas pump (40) or a compressor (41).

11. Preset-pressure testing device according to claim 8, wherein the preset-pressure testing device (1) comprises a three-way valve (13), comprising three flow connections, wherein the test vessel (3) is connected to a first connection of the three-way valve (13), wherein a second connection of the three-way valve (13) is connectable to a membrane expansion vessel (2) and wherein a third connection of the three-way valve is connected or connectable to a compressor (41) or a manually operated gas pump (40).

12. Preset-pressure testing device according to one of the 8 to 11, wherein the preset-pressure testing device (1) comprises a compressor (41) or a manually operated gas pump (41) that is particularly connected to the three-way valve (13), the check valve or the second two-way valve (12) and that is configured to adjust a gas pressure inside a membrane expansion vessel (2).

13. Preset-pressure testing device, according to one of the claims 8 to 12, wherein the preset-pressure testing device (1) is configured to automatically control its components, particularly the two-way (10) or three-way valve (13), the compressor (41), a liquid pump (51), the temperature sensor (30) and /or the pressure sensor (20), such that the preset-pressure testing device (1) is partially or fully automatically operatable, wherein the preset-pressure testing device (1) particularly is configured to estimate the required physical entities such as temperature, pressure and volumes as well as to adjust the pressure and the liquid volume automatically, wherein the preset-pressure testing device (1), particularly comprises an interface that allows an operator to input data that are needed for processing the method according to claim 1 to 5.

14. System for adjusting a gas pressure of a membrane expansion vessel (2) of a liquid circuit system (4), wherein said system comprises

    - a preset-pressure testing device (1) according to one of the claims 8 to 13,
    - a liquid circuit system (4) comprising a membrane expansion vessel (2).

Fig. 1

2

$T_M, T_{Mgas}$
$V_{Mgas}$
$p_M$

2M

2G

2L

11

$V_{Mliq}$

Fig. 2

EP 3 165 881 A1

Fig. 3

13

Fig. 4

Fig. 5

EP 3 165 881 A1

Fig. 6

16

Fig. 7

Fig. 8

Fig 9

Europäisches
Patentamt

European
Patent Office

Office européen
des brevets

# EUROPEAN SEARCH REPORT

Application Number

EP 15 19 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 976 162 A (KAMEN DEAN L [US]) 11 December 1990 (1990-12-11) | 1-7 | INV. G01F22/02 |
| A | * figures 1, 2 * <br> * column 2, line 65 - line 68 * <br> * column 4, line 47 - line 48 * <br> * column 4, line 57 - line 58 * <br> * column 4, line 62 - line 63 * <br> * column 4, line 64 - column 5, line 6 * | 9,10,13 | |
| X | WO 89/01795 A1 (KAMEN DEAN L [US]) 9 March 1989 (1989-03-09) <br> * figure 1 * <br> * equation 7; <br> page 7 * <br> * page 7, line 1 - line 10 * <br> * equations 10a-b, 11, 12; <br> page 8 * <br> * page 9, line 5 - line 8 * | 1,7,8 | |
| X | WO 2010/006610 A1 (DIRAMO AS [DK]; CEQUR APS [DK]; PAASCH KASPER [DK]; GRAVESEN PETER [DK] 21 January 2010 (2010-01-21) <br> * figure 3 * <br> * page 5, line 1 - line 6 * | 8-14 | TECHNICAL FIELDS SEARCHED (IPC) <br><br> G01F |
| A | US 5 859 365 A (KATAOKA ICHIRO [JP] ET AL) 12 January 1999 (1999-01-12) <br> * figures 11-12 * | 3-5 | |
| A | WO 02/101336 A1 (STENMARK LARS [SE]) 19 December 2002 (2002-12-19) <br> * abstract; figure 3 * | 1-14 | |
| A | EP 2 725 335 A1 (SARTORIUS STEDIM BIOTECH GMBH [DE]) 30 April 2014 (2014-04-30) <br> * abstract * <br> * paragraph [0030] * | 1-14 | |

-/--

The present search report has been drawn up for all claims

| Place of search | Date of completion of the search | Examiner |
|---|---|---|
| The Hague | 11 May 2016 | Rambaud, Patrick |

EPO FORM 1503 03.82 (P04C01)

Europäisches
Patentamt

European
Patent Office

Office européen
des brevets

# EUROPEAN SEARCH REPORT

Application Number

EP 15 19 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2005 044116 A1 (DEUTSCH ZENTR LUFT & RAUMFAHRT [DE]) 8 March 2007 (2007-03-08)<br>* figure 1 *<br>* paragraphs [0072], [0075] *<br>----- | 1-14 | |
| A | WO 2007/110825 A2 (KONINKL PHILIPS ELECTRONICS NV [NL]; LOOIJEN JEROEN [NL]; DE JONG MICH) 4 October 2007 (2007-10-04)<br>* figures 1-2 *<br>----- | 1-14 | |
| A | WO 00/73745 A1 (DEKA PRODUCTS LP [US]) 7 December 2000 (2000-12-07)<br>* figures 2-3 *<br>----- | 1-14 | |

**TECHNICAL FIELDS
SEARCHED      (IPC)**

The present search report has been drawn up for all claims

| Place of search | Date of completion of the search | Examiner |
|---|---|---|
| The Hague | 11 May 2016 | Rambaud, Patrick |

EPO FORM 1503 03.82 (P04C01)

## ANNEX TO THE EUROPEAN SEARCH REPORT
## ON EUROPEAN PATENT APPLICATION NO.

EP 15 19 2902

This annex lists the patent family members relating to the patent documents cited in  the above-mentioned European search report.
The members are as contained in the European Patent Office EDP file on
The European Patent Office is in no way liable for these particulars which are merely given for the purpose of information.

11-05-2016

| Patent document cited in search report | | Publication date | Patent family member(s) | | Publication date |
|---|---|---|---|---|---|
| US 4976162 | A | 11-12-1990 | AT | 175270 T | 15-01-1999 |
| | | | CA | 2049337 A1 | 02-11-1990 |
| | | | DE | 69032869 D1 | 11-02-1999 |
| | | | DE | 69032869 T2 | 02-06-1999 |
| | | | DK | 0471000 T3 | 30-08-1999 |
| | | | EP | 0471000 A1 | 19-02-1992 |
| | | | JP | 2952037 B2 | 20-09-1999 |
| | | | JP | H05502096 A | 15-04-1993 |
| | | | KR | 166337 B1 | 01-05-1999 |
| | | | US | 4976162 A | 11-12-1990 |
| | | | WO | 9013795 A2 | 15-11-1990 |
| WO 8901795 | A1 | 09-03-1989 | CA | 1290211 C | 08-10-1991 |
| | | | DE | 3882966 T2 | 25-11-1993 |
| | | | EP | 0332690 A1 | 20-09-1989 |
| | | | JP | 3092070 B2 | 25-09-2000 |
| | | | JP | H02501198 A | 26-04-1990 |
| | | | US | 4826482 A | 02-05-1989 |
| | | | WO | 8901795 A1 | 09-03-1989 |
| WO 2010006610 | A1 | 21-01-2010 | NONE | | |
| US 5859365 | A | 12-01-1999 | JP | 3488013 B2 | 19-01-2004 |
| | | | JP | H09280920 A | 31-10-1997 |
| | | | US | 5859365 A | 12-01-1999 |
| WO 02101336 | A1 | 19-12-2002 | EP | 1412709 A1 | 28-04-2004 |
| | | | US | 2004231413 A1 | 25-11-2004 |
| | | | WO | 02101336 A1 | 19-12-2002 |
| EP 2725335 | A1 | 30-04-2014 | EP | 2725335 A1 | 30-04-2014 |
| | | | EP | 2870448 A1 | 13-05-2015 |
| | | | US | 2015226628 A1 | 13-08-2015 |
| | | | WO | 2014063767 A1 | 01-05-2014 |
| DE 102005044116 | A1 | 08-03-2007 | NONE | | |
| WO 2007110825 | A2 | 04-10-2007 | BR | PI0708922 A2 | 14-06-2011 |
| | | | CN | 101410699 A | 15-04-2009 |
| | | | EP | 2002223 A2 | 17-12-2008 |
| | | | JP | 2009531118 A | 03-09-2009 |
| | | | RU | 2008142765 A | 10-05-2010 |
| | | | US | 2010233682 A1 | 16-09-2010 |
| | | | WO | 2007110825 A2 | 04-10-2007 |
| WO 0073745 | A1 | 07-12-2000 | AU | 4331100 A | 18-12-2000 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 19 2902

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2016

| Patent document cited in search report | Publication date | Patent family member(s) | | Publication date |
|---|---|---|---|---|
| | | US | 6321597 B1 | 27-11-2001 |
| | | WO | 0073745 A1 | 07-12-2000 |

EPO FORM P0459

For more details about this annex : see Official Journal of the European Patent Office, No. 12/82